# EUROPEAN PATENT APPLICATION

(11) **EP 1 625 932 A2**
(43) Date of publication of application: **15.02.2006**
(21) Application number: 05016598.4
(22) Date of filing: 29.07.2005
(51) Int. Cl.: B29D 30/60, B29C 47/00, B29C 43/46

(54) **Manufacturing method of rubber member for tire**

(30) Priority: 12.08.2004 JP 2004235513
(71) Applicant: SUMITOMO RUBBER INDUSTRIES LIMITED, Kobe-shi, Hyogo-ken (JP)
(72) Inventor: Sugiyama, Naoki c/o Sumitomo Rubber Ind., Ltd., Kobe-shi Hyogo-ken (JP); Miki, Youjiro c/o Sumitomo Rubber Ind., Ltd., Kobe-shi Hyogo-ken (JP)
(74) Representative: Manitz, Finsterwald & Partner GbR

(57) **Abstract**

A manufacturing method of a rubber member for a tire is provided with a winding step of overlapping and winding a rubber strip (10) in a peripheral direction and in a spiral shape. The rubber strip (10) is provided with a plurality of exhaust grooves (11) which extend in a direction intersecting a longitudinal direction (F) and allow to discharge air between the overlapped rubber strips (10), in at least one surface.

## Description

### BACKGROUND OF THE INVENTION

### Field of the Invention

The present invention relates to a manufacturing method of a rubber member for a tire for forming the rubber member for the tire by overlapping and winding a rubber strip in a peripheral direction and in a spiral shape.

### Prior Art

Since a required characteristic in each of regions is different in a pneumatic tire, the pneumatic tire is constituted by various rubber members in which a composition and a cross sectional shape are differentiated, for example, a tread rubber, a sidewall rubber, a clinch rubber, a belt cushion rubber, an inner liner rubber or the like. Further, in conventional, in the rubber member, there has been used a formed body which is extrusion molded by a rubber extruder or the like and has a desired cross sectional shape. Further, each of the rubber members is formed by winding the formed body on a forming drum or the like at one circuit, in a raw tire forming step.

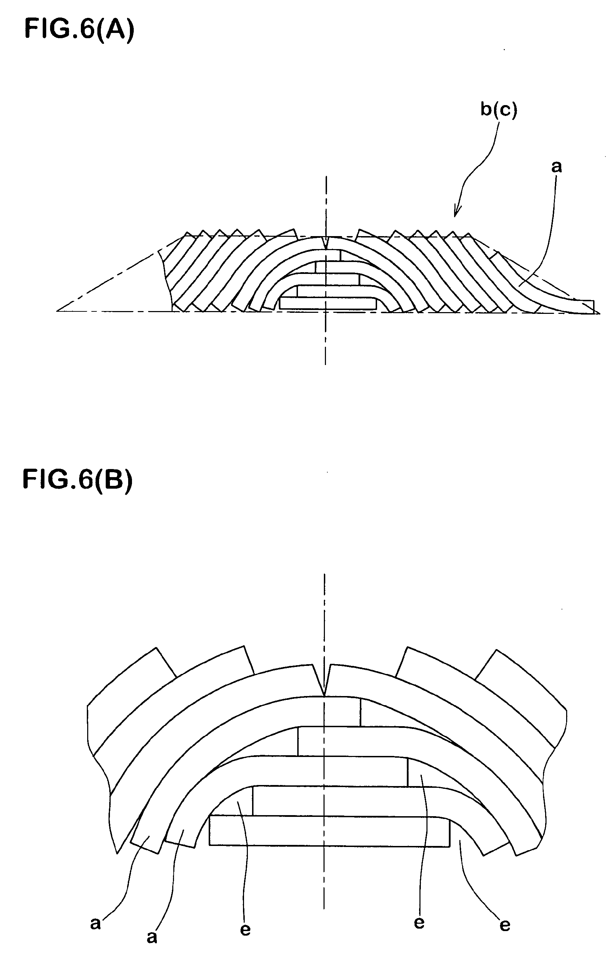

On the contrary, in recent years, as exemplified in Fig. 6 (A), there has been proposed a so-called strip wind method of directly forming a strip wind body (b) similar to a desired cross sectional shape as a rubber member (c) on a forming drum by overlapping and winding a rubber strip (a) in a peripheral direction and in a spiral shape. In the same drawing, there is exemplified a case that the rubber member (c) is constituted by a tread rubber. In accordance with this method, it is not necessary to store each of the formed bodies for the rubber member as an intermediate stock. Accordingly, it is possible to improve a tire manufacturing efficiency, and it is possible to achieve a space saving, so that there can be provided with a great advantage for the tire which tends to be manufactured in accordance with a large item small scale production.

However, in the case of forming the rubber member(c)in accordance with the strip wind method, a gap (e) is formed between the wound rubber strips (a), between the rubber strip (a) and the forming drum or the like, as shown in Fig. 6 (B) in an enlarged manner. Accordingly, an air remnant tends to be generated within the gap (e) after the vulcanizing process, and there is a risk that a reduction of a tire quality such as a uniformity is caused.

### SUMMARY OF THE INVENTION

Accordingly, the present invention is based on arranging a plurality of exhaust grooves in parallel in at least one surface of a rubber strip, and an object of the present invention is to provide a manufacturing method of a rubber member for a tire which can effectively inhibit an air remnant from being generated within the gap and can maintain a tire quality high while securing the advantage obtained by the strip wind method.

In order to achieve the problem mentioned above, in accordance with a first aspect of the present invention, there is provided a manufacturing method of a rubber member for a tire for forming the rubber member for the tire in which a rubber strip is overlapped, by overlapping and winding the rubber strip in a peripheral direction and in a spiral shape, wherein the rubber strip is provided with a plurality of exhaust grooves which extend in a direction intersecting a longitudinal direction of the rubber strip and allow to discharge air between the overlapped rubber strips, in parallel in at least one surface.

Since the present invention is structured as mentioned above, it is possible to effectively inhibit an air remnant from being generated between the rubber strips and between the rubber strip and the forming drum or the like and can maintain a tire quality high while securing the advantage obtained by the strip wind method.

### BRIEF DESCRIPTION OF THE DRAWINGS

Fig. 1 is a cross sectional view showing an embodiment of a pneumatic tire using a rubber member for a tire manufactured in accordance with a manufacturing method of the present invention;
Fig. 2 is a cross sectional view in the case that the tire rubber member is constituted by a tread rubber;
Fig. 3 is a perspective view showing a rubber strip together with an exhaust groove;
Figs. 4 (A) to 4 (B) are cross sectional views showing cross sectional shapes of the exhaust groove;
Fig. 5 is a graph conceptually showing a strip manufacturing apparatus forming the rubber strip; and
Figs. 6 (A) and 6 (B) are cross sectional views explaining a problem in a prior art.

### DETAILED DESCRIPTION OF THE PREFERRED EMBODIMENTS

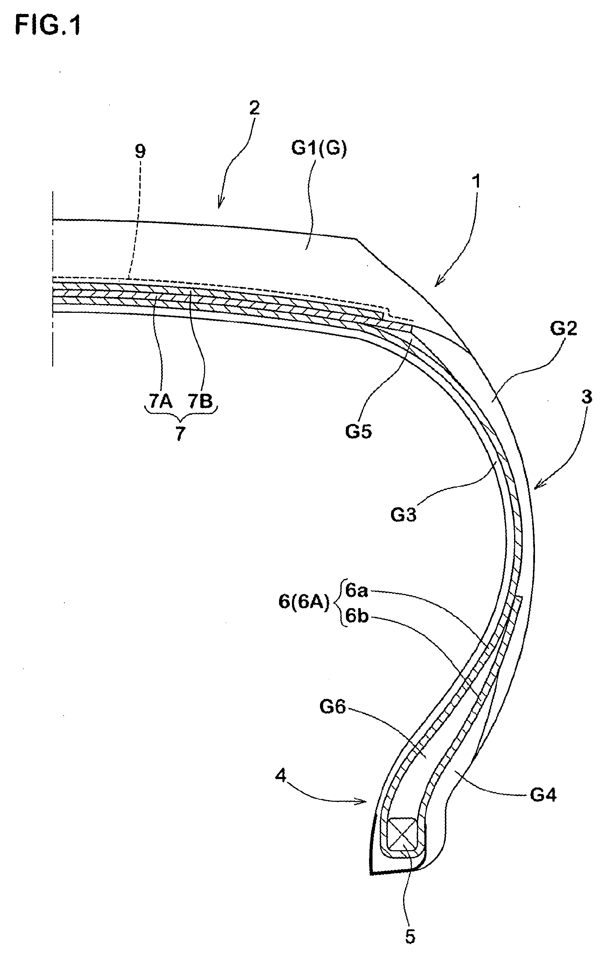

A description will be given below of an embodiment in accordance with the present invention together with an illustrated embodiment. Fig. 1 is a cross sectional view showing an embodiment of a pneumatic tire which is vulcanized by using a rubber member for a tire manufactured in accordance with a manufacturing method of the present invention.

As shown in Fig. 1, a pneumatic tire 1 is formed so as to be provided with plural kinds of tire rubber members G in which a rubber composition is differentiated, and a cord reinforcing layer including a carcass 6 forming a framework of the tire and a belt 7 arranged in an outer side thereof in a radial direction.

The carcass 6 is constituted by one or more carcass plies in which a carcass cord is arranged at an angle of, for example 70° to 90° with respect to a tire peripheral direction, one carcass ply 6A in the present embodiment. The carcass ply 6A is continuously provided with a ply turnback portion 6b which is turned back around a bead core 5, in both sides of a ply main body portion 6a which extends to the bead core 5 of a bead portion 4 from a tread portion 2 via a sidewall portion 3.

Further, the belt 7 is constituted by two or more belt plies in which a belt cord is arranged at an angle of, for example, 10° to 35° with respect to the tire peripheral direction, two belt plies 7A and 7B in the present embodiment. In the belt layer 7, the belt cords intersect alternately between the plies, whereby a belt rigidity is improved and the belt layer 7 firmly reinforces the tread portion 2. In this case, an outer side of the belt 7 can be provided with a band 9 in which a band cord is arranged along the tire peripheral direction, mainly for the purpose of improving a high-speed running performance.

Next, the tire rubber member G can include a tread rubber G1 arranged in the tread portion 2 and forming a ground surface, a sidewall rubber G2 arranged in the sidewall portion 3 and forming a tire outer surface, an inner liner rubber G3 arranged in an inner side of the carcass 6 and forming a tire cavity, a clinch rubber G4 arranged in the bead portion 4 and preventing a rim displacement, a belt cushion rubber G5 arranged on both ends of the belt 7 and with respect to the carcass 6 and protecting a belt outer end, and a bead apex rubber G6 extending to an outer side in a radial direction from the bead core 5.

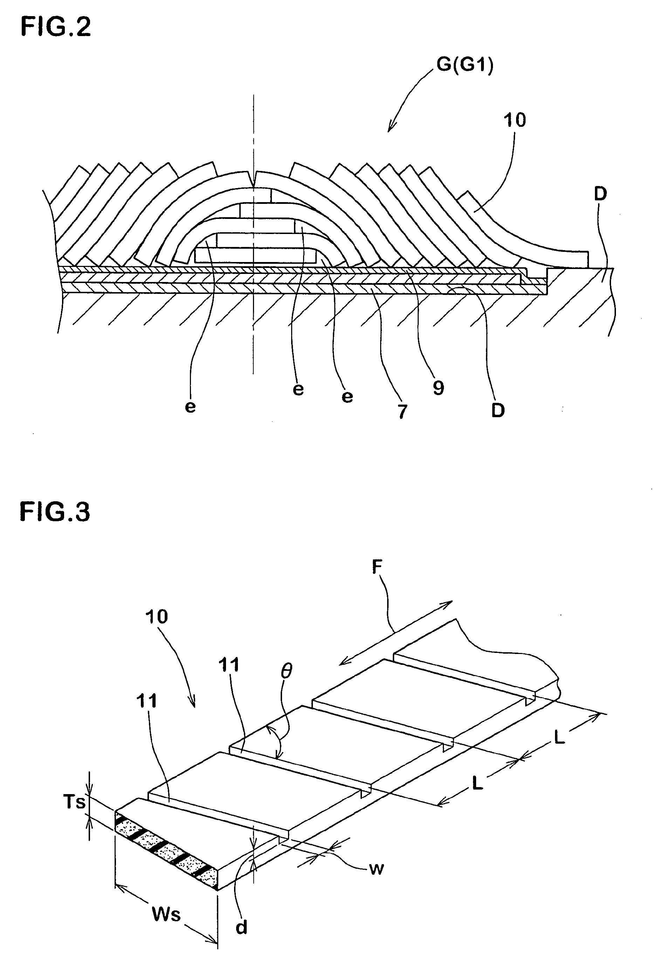

Further, at least one of the tire rubber members G1 to G6 is formed in accordance with a strip wind method. In other words, as shown in Fig. 2, the tire rubber member G is formed as a wind body of an unvulcanized rubber strip 10 by continuously overlapping and winding the rubber strip 10 in a peripheral direction and in a spiral shape. In this case, Fig. 2 exemplifies a case that the tread rubber G1 is formed by sequentially forming the belt 7 and the band 9 on a cylindrical forming drum D and thereafter further winding the rubber strip 10 on an upper surface thereof.

At this time, in accordance with the strip wind method, a gap e is formed between the wound rubber strips 10 and between the rubber strip 10 and the band 9. Accordingly, there is a risk that an air remnant is generated within the gap e after the vulcanization, and a reduction of a tire quality such as a uniformity is caused.

In accordance with the present invention, as shown in Fig. 3, a plurality of exhaust grooves 11 extending in a direction intersecting a longitudinal direction F of the rubber strip 10 are provided in parallel in at least one surface of the rubber strip 10.

Since the exhaust grooves 11 extends in the direction intersecting the longitudinal direction F, they can form an exhaust flow path communicating with a tire surface in cooperation with each other. Accordingly, it is possible to discharge air interposing within the gap e to a tire external portion through the exhaust flow path on the basis of a vulcanizing pressure applied at the time of vulcanizing, and it is possible to effectively inhibit the air remnant from being generated.

In this case, if an angle θ of the exhaust groove 11 with respect to the longitudinal direction F is too small, a length of the exhaust flow path running into the tire surface becomes too large. As a result, an exhaust efficiency is deteriorated and there is generated a risk that the air is left within the exhaust flow path. Accordingly, it is preferable that the angle θ of the exhaust groove 11 is set equal to or more than 30°, further equal to or more than 45°, and further equal to or more than 60°, in the light of the exhaust efficiency. On the other hand, in the light of a size stability of the rubber strip 10, it is preferable that an interval L (shown in Fig. 3) between the exhaust grooves 11 is larger. If the interval L is large, however, there is a tendency that the exhaust efficiency is deteriorated. Accordingly, as a result of a research of the inventor of the present invention, if the angle θ is set smaller than 90° (θ > 90) so as to be inclined to some extent, there is found a matter that a sufficient exhaust efficiency can be secured even in the case that the interval L is large. Therefore, in order to make the exhaust efficiency and the size stability compatible, it is preferable that the angle θ is smaller than 90°, preferably equal to or less than 80°, and further preferably equal to or less than 70°.

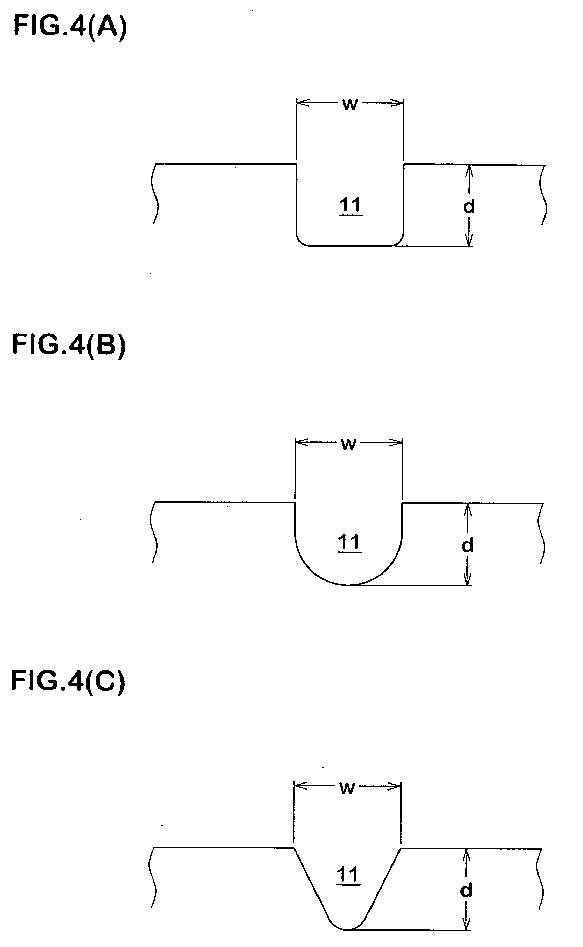

Further, the exhaust groove 11 can be formed in both surfaces of the rubber strip 10. It is preferable, however, that the exhaust groove 11 is formed only in one surface as in the present embodiment, in the light of a size stability of the rubber strip 10, a tensile strength and the like. At this time, as shown in Figs. 4(A) to 4(C), it is preferable that a depth d of the exhaust groove 11 is set to 0.1 to 1.0 mm, a width w is set to 0.1 to 2.0 mm, and an interval L between the exhaust grooves 11 and 11 is set to 5 to 50 mm. In the case that the depth d is larger than 1.0 mm, the width w is larger than 2.0 mm and the interval L is smaller than 5 mm, an elongation is generated in the rubber strip 10 on the basis of a tension applied at a time of carrying and winding. As a result, there is a tendency that a cross sectional shape and a size precision of the formed tire rubber member G are deteriorated. In this case, when the depth d is smaller than 0.1 mm, the width w is smaller than 0.1 mm and the interval L is larger than 50 mm, a sufficient exhaust efficiency can not be obtained. From this point of view, it is preferable that an upper limit of the depth d is set equal to or less than 0.5 mm, and an upper limit of the width w is set equal to or less than 1.0 mm and further equal to or less than 0.5 mm. Further, in the light of the size stability or the like, it is preferable that the depth d is set equal to or less than 50 % of a thickness Ts of the rubber strip 10.

Further, as a cross sectional shape of the exhaust groove 11, there can be employed various shapes such as an approximately rectangular shape, an approximately U shape, an approximately V shape, as shown in Figs. 4(A) to 4(C).

Further, a cross sectional shape of the rubber strip 10 is not particularly regulated, and is exemplified by a flat long sideways and approximately rectangular shape in the present embodiment. However, for example, a trapezoidal shape or the like in which both ends are tapered can reduce concavity and convexity on a surface of the tire rubber member G, and can be preferably employed. Further, in the rubber strip 10, it is preferable for finishing the tire rubber member G in a shape similar to a desired cross sectional shape to set a thickness Ts to 0.5 to 3.0 mm, and set a width Ws to 5 to 20 mm. The rubber strip 10 with groove as mentioned above can form the tire rubber member G in accordance with the same winding method as the conventional one.

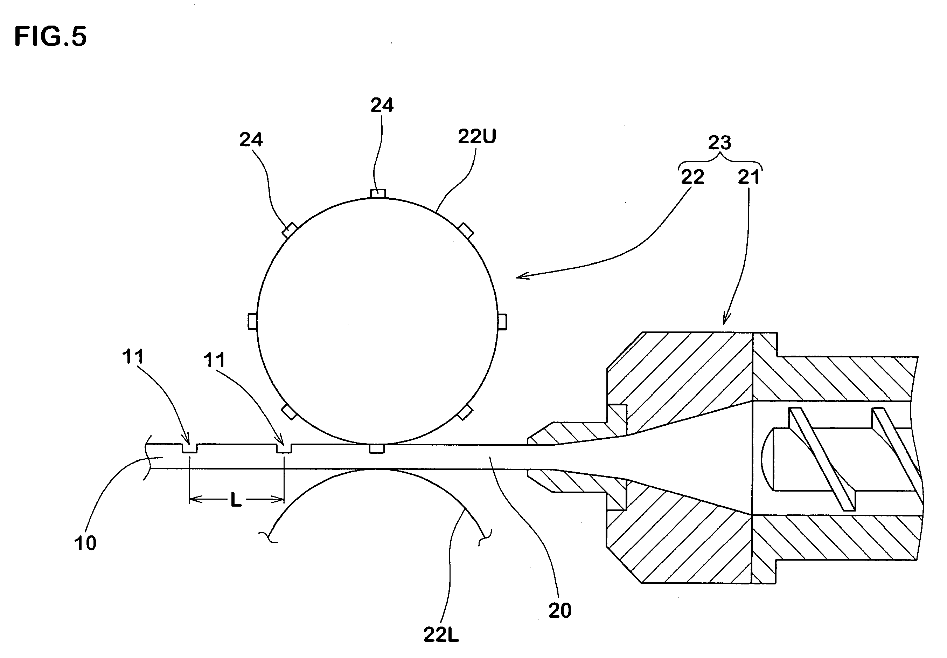

Next, the rubber strip 10 can be manufactured by a strip manufacturing apparatus 23 provided with a rubber extruding machine main body 21 extrusion molding a flat long sideways and band-like rubber extrusion body 20, and a roller head 22 finishing the rubber extrusion body 20 from the rubber extruding machine main body 21 in a final cross sectional shape, as conceptually shown in Fig. 5. At this time, a convex rib 24 for forming the exhaust groove is provided in an outer peripheral surface of one of upper and lower calendar rollers 22U and 22L forming the roller head 22, the upper calendar roller 22U in the present embodiment, in parallel at the same angle as the angle θ with respect to a peripheral direction. Accordingly, the convex rib 24 breaks into the rubber extrusion body 20 at a time of finishing the rubber extrusion body 20 from the rubber extruding machine main body 21 in the final cross sectional shape by the roller head 22, whereby it is possible to form the exhaust groove 11 in the surface at a predetermined interval L.

In this case, in the present invention, although not illustrated, various tire rubber members G other than the tread rubber G1 can be formed by winding the rubber strip 10. In particular, in the case of forming the tire rubbermemberG forming an outer surface of the tire or a tire cavity, for example, the tread rubber G1, the sidewall rubber G2, the clinch rubber G4 and the inner liner rubber G3 by winding the rubber strip 10, it is also possible to achieve an effect capable of reducing an air remnant between the outer surface of the tire and a vulcanizing metal mold, and an air remnant between the tire cavity and a bladder, and it is also possible to expect an improvement of an outer appearance quality.

A description is in detail given above of the particularly preferable embodiments in accordance with the present invention, however, the present invention is not limited to the illustrated embodiments, and can be executed by being modified to various aspects.

### Examples

A pneumatic tire (tire size 215/45ZR17) in which a tread rubber is formed by using a rubber strip having a specification in Table 1 is manufactured by way of trial. Further, a defect generating condition on an outer surface of each of the trial tires due to the air remnant or the like and a uniformity are compared and evaluated. Specifications other than the specifications described in Table 1 are the same.

### (1) Generating Condition of Defect

A condition such as a bare on the tread outer surface is inspected by a visual observation with respect to each of thirty trial tires, and is evaluated on the basis of the following references A, B and C.
A: Bare or the like is not recognized.
B: Small defect is recognized. (light level requiring no retouch)
C: Large defect is recognized. (level requiring retouch)

### (2) Uniformity

RFV (O. A.) is measured on the basis of a standard of JASO C607 by using a force variation (FV) tester, the average value of the thirty trial tires is obtained.

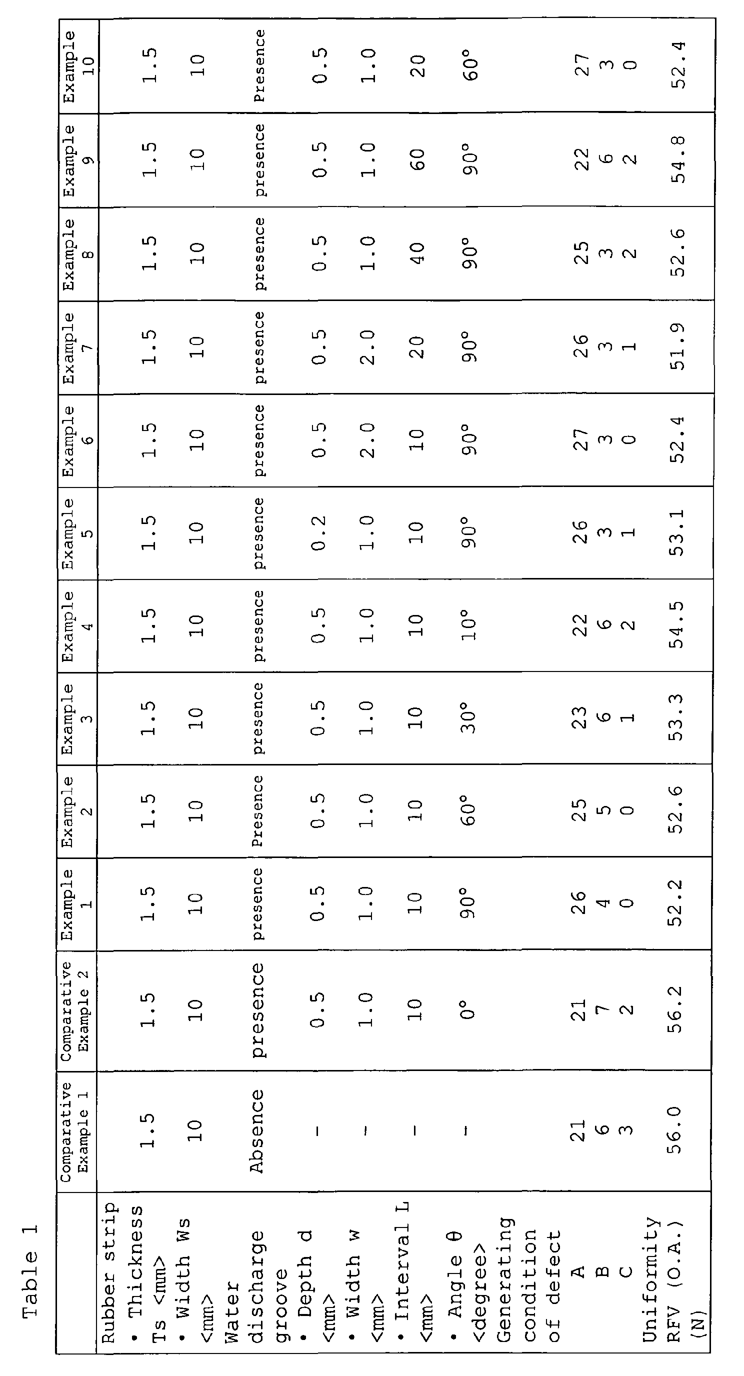

## Claims

1. A manufacturing method of a rubber member for a tire comprising a winding step of forming the rubber member for the tire in which a tape-like rubber strip is overlapped, by overlapping and winding the rubber strip in a peripheral direction and in a spiral shape, wherein said rubber strip is provided with a plurality of exhaust grooves which extend in a direction intersecting a longitudinal direction of said rubber strip and allow to discharge air between the overlapped rubber strips, in parallel in at least one surface.

2. A manufacturing method of a rubber member for a tire as claimed in claim 1, wherein said exhaust grooves are provided in parallel at an angle θ equal to or more than 30° with respect to said longitudinal direction.

3. A manufacturing method of a rubber member for a tire as claimed in claim 1 or 2, wherein said exhaust grooves are formed only in one surface of said rubber strip, a depth d of said exhaust grooves is 0.1 to 1.0 mm, a width w thereof is 0.1 to 2.0 mm and an interval L between the exhaust grooves is 5 to 50 mm.

4. A manufacturing method of a rubber member for a tire as claimed in any one of claims 1 to 3, wherein a depth d of said exhaust grooves is set equal to or less than 50% of a thickness Ts of the rubber strip.

5. A manufacturing method of a rubber member for a tire as claimed in any one of claims 1 to 4, wherein said rubber strip is formed in a rectangular cross sectional shape or a trapezoidal cross sectional shape.

6. A manufacturing method of a rubber member for a tire as claimed in claim 5, wherein a thickness Ts of said rubber strip is 0.5 to 3.0 mm, and a width Ws thereof is 5 to 20 mm.
